(19) Europäisches Patentamt
European Patent Office
Office européen des brevets

(11) EP 1 236 781 B1

(12) **EUROPEAN PATENT SPECIFICATION**

(45) Date of publication and mention of the grant of the patent:
**08.09.2004 Bulletin 2004/37**

(21) Application number: **01934506.5**

(22) Date of filing: **01.06.2001**

(51) Int Cl.[7]: **C09D 133/06**, C09D 123/28, C09D 5/00, C09D 5/02, C08L 33/06, B05D 7/24

(86) International application number:
**PCT/JP2001/004667**

(87) International publication number:
**WO 2001/092432 (06.12.2001 Gazette 2001/49)**

(54) **SYNTHETIC RESIN EMULSION AND SEALER COMPOSITION CONTAINING THE SAME FOR RECOATING**

SYNTHETISCHE HARZEMULSION UND SIEGELZUSAMMENSETZUNG, DIE DIESE FÜR DIE WIEDERBESCHICHTUNG ENTHÄLT

EMULSION DE RESINE SYNTHETIQUE ET COMPOSITION IMPERMEABILISANTE CONTENANT CETTE EMULSION POUR LA REPEINTURE

(84) Designated Contracting States:
**CH DE FR GB IT LI**

(30) Priority: **01.06.2000 JP 2000164663**

(43) Date of publication of application:
**04.09.2002 Bulletin 2002/36**

(73) Proprietor: **Clariant Finance (BVI) Limited**
**Road Town, Tortola (VG)**

(72) Inventor: **SUZUKI, H.**
**Clariant Polymers Kabushiki Kaisha**
**Ogasa-gun, Shizuoka 437-1412 (JP)**

(74) Representative: **Hütter, Klaus, Dr. et al**
**Clariant Service GmbH**
**Patente, Marken, Lizenzen**
**Am Unisys-Park 1**
**65843 Sulzbach (DE)**

(56) References cited:
**EP-A- 0 810 274**
**EP-A2- 0 952 161**
**JP-A- 3 134 078**
**JP-A- 9 302 270**
**JP-A- 11 124 545**
**US-A- 5 250 609**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 236 781 B1

## Description

[BACKGROUND OF THE INVENTION]

### Field of the Invention

The present invention relates to a synthetic resin emulsion for use as a main component of an aqueous sealer composition (a primer composition) for recoating of a coating, particularly a resin-type old coating.

### Background Art

Inorganic materials, such as slate and calcium silicate, are generally used as exterior materials for buildings. Further, various topcoating materials are usually coated on the surface of these exterior materials to form a coating from the viewpoints of appearance or protection, and acrylic resin coating materials are in many cases used as the topcoating material. The coatings are deteriorated with the elapse of time, for example, due to the deposition of soils or stains or due to exposure to ultraviolet light and rain. Therefore, the coatings, which have been deteriorated due to the deposition of stains or soils, that is, the old coatings, should be repaired.

Methods for repairing the old coating include one wherein the old coating is removed before recoating is carried out and one wherein a new coating material is coated on the old coating. In the case of the latter, in many cases, after a sealer is coated on the old coating, an elastic coating material, such as an aqueous single-layer elastic coating material, is coated for finishing.

Sealers using an organic solvent has hitherto been mainly used for recoating. So far as the present inventors know, however, conventional aqueous sealers suffer from a problem of the adhesion to an aqueous single-layer elastic coating material and thus have hardly been used. Although sealers using an organic solvent have excellent adhesion, the amount of the organic solvent used is so large that there is a tendency toward the restriction of the use of the sealers using an organic solvent.

For this reason, sealers for recoating are preferably aqueous sealers free from any organic solvent. In many cases, post-emulsification products of chlorinated polyolefins are used as aqueous sealers for recoating.

In the case of the sealers produced by the post-emulsification of chlorinated polyolefins, in the post-emulsification, however, the chlorinated polyolefins should be dissolved in a large amount of an organic solvent. Therefore, the necessity of using the organic solvent cannot be completely eliminated. Further, these sealers are likely to cause precipitation due to high specific gravity of the chlorinated polyolefin. This often poses a problem of storage stability. Furthermore, in the production of these sealers, since the chlorinated polyolefin resin and a large amount of an emulsifier are necessary, the material cost is likely to be higher than that of conventional aqueous acrylic emulsions or aqueous styrene/acrylic emulsions. Furthermore, in recent years, a growing interest in environmental problems has lead to a strong demand for dechlorination, and, in the sealers, reducing the amount of the chlorinated polyolefins containing chlorine used or eliminating the necessity of using the chlorinated polyolefins has been desired.

[SUMMARY OF THE INVENTION]

The present inventors have now found that, despite the fact that any low-boiling organic solvent, such as xylene or toluene, is not contained, aqueous sealers, which have been prepared using an emulsion, satisfying specific requirements, prepared by copolymerization of monomers in a specific mixing ratio in the presence of a specific emulsifier have excellent properties on the same level as solvent-type sealers, for example, have the same adhesion to the old coating face as solvent-type sealers. The present invention has been made based on such finding.

Accordingly, it is an object of the present invention to provide a synthetic resin emulsion for use in an aqueous sealer composition having excellent adhesion to an old coating and a topcoating.

According to one aspect of the present invention, there is provided a synthetic resin emulsion comprising synthetic resin particles dispersed in water, said synthetic resin emulsion which is produced by copolymerizing

(a) 20 to 99.5% by weight of an alkyl (meth)acrylate wherein the content of an alkyl (meth)acrylate, in which the alkyl group has 4 or less carbon atoms, is not less than 50% by weight based on the whole alkyl (meth)acrylate;
(b) 0.5 to 10% by weight of an ethylenically unsaturated carboxylic acid; and
(c) 0 to 79.5% by weight of a monomer copolymerizable with said monomers (a) and (b), in the presence of an alkyldiphenyl ether disulfonate as an emulsifier,

said synthetic resin emulsion having a glass transition temperature (Tg) of 15 to 50°C, the average particle diameter of the synthetic resin particles dispersed in water being 0.01 to 0.2 μm.

According to another aspect of the present invention, there is provided a sealer composition for recoating of a coating, comprising the above synthetic resin emulsion.

[DETAILED DESCRIPTION OF THE INVENTION]

Synthetic resin emulsion

The synthetic resin emulsion according to the present invention is used as a main component of a sealer composition for recoating of an old coating. Here the old coating refers to a coating which has been formed by coating various resin-type coating materials onto the surface of exterior materials in buildings and has been deteriorated due to the deposition of soils or stains with the elapse of time or due to the influence of ultraviolet light, rain or the like. In this case, the various resin-type coating materials may be any resin-type coating material independently of whether the coating material is of solvent type or aqueous. Specific examples of resin-type coating materials include acrylic resin coating materials, acryl/vinyl acetate resin coating materials, acryl/styrene resin coating materials, vinyl chloride resin coating materials, alkyd resin coating materials, and urethane resin coating materials. In the present invention, among these resin-type coating materials, acrylic resin coating materials or acryl/vinyl acetate resin coating materials are preferred.

Further, the sealer composition for recoating of an old coating refers to a composition which is coated onto an old coating, for example, from the viewpoint of improving the adhesion between a topcoating (or an exterior coating), provided for ornamentation or protection of an exterior material in a building, and the old coating on the surface of the exterior material, and improving the appearance of the topcoating.

The topcoating material may be either aqueous or of solvent type, and specific examples thereof include elastic coating materials, such as single-layer elastic coating materials and multi-layer elastic coating materials, acrylic resin coating materials, acryl/styrene resin coating materials, acryl/silicone resin coating materials, silicone resin coating materials, acryl/urethane resin coating materials, and urethane resin coating materials. Among them, single-layer elastic coating materials commonly used for recoating are preferred.

As described above, the synthetic resin emulsion according to the present invention comprises synthetic resin particles dispersed in water, the synthetic resin emulsion having been produced by copolymerizing

(a) 20 to 99.5% by weight of an alkyl (meth)acrylate wherein the content of an alkyl (meth)acrylate, in which the alkyl group has 4 or less carbon atoms, is not less than 50% by weight based on the whole alkyl (meth)acrylate;
(b) 0.5 to 10% by weight of an ethylenically unsaturated carboxylic acid; and
(c) 0 to 79.5% by weight of a monomer copolymerizable with said monomers (a) and (b)

in the presence of an alkyldiphenyl ether disulfonate as an emulsifier. The synthetic resin emulsion has a glass transition temperature (Tg) of 15 to 50°C, and the average particle diameter of the synthetic resin particles dispersed in water is 0.01 to 0.2 μm.

The synthetic resin emulsion according to the present invention is highly penetrable into deteriorated old coatings of various resins, and has excellent adhesion, particularly water resisting adhesion, to coating materials used as topcoating materials for recoating, such as single-layer elastic coating materials or multi-layer elastic coating materials. Therefore, neither the so-called "blistering" in the interface of the topcoating material and the sealer and in the interface of the sealer and the old coating nor separation of the topcoating occurs. Further, according to the synthetic resin emulsion of the present invention, an aqueous sealer composition having adhesion, to the old coating, comparable to the solvent-type material can be prepared without the use of any organic solvent, such as low-boiling solvents, and, thus, the occurrence of air pollution or an offensive odor, which is a problem involved in coating in site, can be prevented. In addition, the synthetic resin emulsion of the present invention can avoid the use of the chlorinated polyolefin or can reduce the amount of the chlorinated polyolefin used. Therefore, the occurrence of the offensive smell involved in conventional aqueous sealers can be reduced, and, in addition, the content of chlorine in the sealer composition can be reduced.

Alkyldiphenyl ether disulfonate

In the present invention, an alkyldiphenyl ether disulfonate is incorporated into the synthetic resin emulsion according to the present invention by adding the alkyldiphenyl ether disulfonate as an emulsifier at the time of copolymerization, or by adding the alkyldiphenyl ether disulfonate after the copolymerization. In the present invention, preferably, the alkyldiphenyl ether disulfonate is incorporated into the synthetic resin emulsion by using it as the emulsifier at the time of copolymerization.

In the present invention, the alkyldiphenyl ether disulfonate is a compound represented by formula (I):

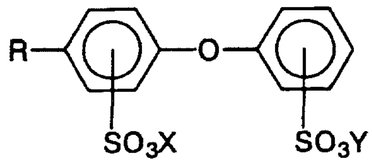

In the above formula, R represents an alkyl group; and X and Y, which may be the same or different, represent a monovalent cation such as sodium, potassium, or $NH_3$. Among them, sodium (Na) is preferred because sodium is easily available. Therefore, the alkyldiphenyl ether disulfonate used as the emulsifier in the present invention is preferably sodium alkyldiphneyl ether disulfonate.

Further, the alkyldiphenyl ether disulfonate used in the present invention has the effect of imparting alkali resistance to the synthetic resin emulsion, and, thus, the use of the alkyldiphenyl ether disulfonate is also advantageous in that the sealer and the topcoating material can be protected against an alkali derived from inorganic substrates.

In the present invention, sodium alkyldiphenyl ether disulfonate is available, for example, from Kao Corp. under the trade designation Pelex SSL or Pelex SSH and from Nippon Nyukazai K.K. under the trade designation Dowfax 2 A 1, Newcol 271 A, or Newcol 271 S. Likewise, ammonium alkyldiphenyl ether disulfonate is available, for example, from Nippon Nyukazai K.K. under the trade designation Newcol 271 NH.

The amount of the alkyldiphenyl ether disulfonate used is preferably 0.1 to 20% by weight, more preferably 0.3 to 10% by weight, based on the total amount of the monomers. The use of the alkyldiphenyl ether disulfonate in an amount falling within the above-defined range is preferred because the resultant sealer has better adhesion and water resistance.

Further, according to the present invention, other surfactant can be used as the emulsifier in combination with the alkyldiphenyl ether disulfonate.

Other surfactants usable herein include surfactants used in conventional emulsion polymerization, for example, anionic surfactants, nonionic surfactants, cationic surfactants, and radically polymerizable surfactants having a radically polymerizable unsaturated bond in the structure thereof. They may be used solely or in a combination of two or more.

Anionic surfactants include, for example, sodium alkylbenzenesulfonate, sodium alkylsulfonates, and sodium polyoxyethylene alkyl ether sulfonate.

Likewise, nonionic surfactants include, for example, polyoxyethylene alkyl ether, polyoxyethylene alkyl ether, polyoxyethylene glycol, and polyoxypropylene glycol surfactants.

The radically polymerizable surfactant may be properly selected from conventional radically polymerizable surfactants, for example, anionic surfactants and nonionic reactive surfactants. Specific examples of radically polymerizable surfactants include the following compounds 1) to 15):

1) 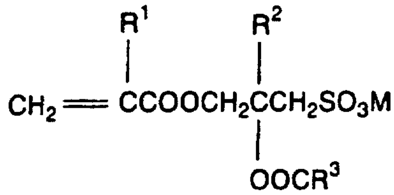

wherein
$R^1$ and $R^2$: H or $CH_3$;
$R^3$: $C_{7-21}$ alkyl or alkenyl group; and
M: alkali metal or ammonium group
(see Japanese Patent Laid-Open No. 144317/1979)

2) 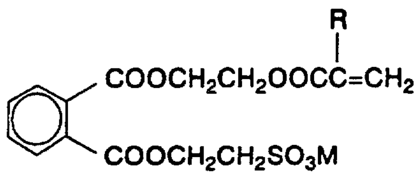

wherein
R: H or $CH_3$; and
M: alkali metal, ammonium group, or amine
(see Japanese Patent Laid-Open No. 115419/1980)

3) 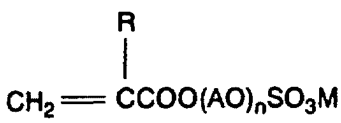

wherein
R: H or $CH_3$;
A: alkylene group;
n: integer of 2 or more; and
M: monovalent or divalent cation
(see Japanese Patent Laid-Open No. 34947/1987)

4) 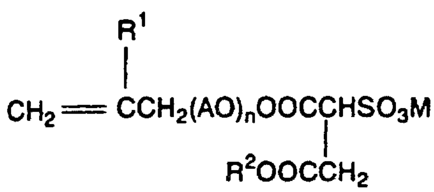

wherein
$R^1$: H or $CH_3$;
$R^2$: unsubstituted or substituted hydrocarbon group or the like;
A: $C_{2-4}$ alkylene group or substituted alkylene group; and
n: 0 or positive number
(see Japanese Patent Publication No. 46291/1974)

5) 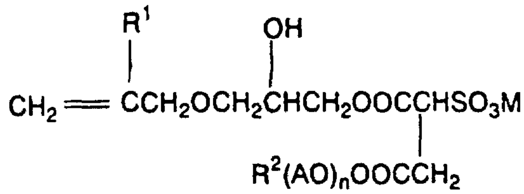

wherein
$R^1$: H or $CH_3$;
$R^2$: unsubstituted or substituted hydrocarbon group, amino group or the like;
A: $C_{2-4}$ alkylene group;
n: 0 to 100; and
M: monovalent or divalent cation
(see Japanese Patent Laid-Open No. 203960/1983)

6) 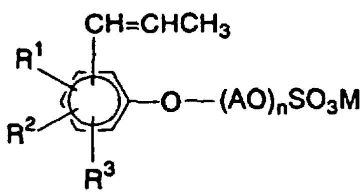

wherein
$R^1$: $C_{6-18}$ alkyl group or the like;
$R^2$: H, $C_{6-18}$ alkyl group or the like;
$R^3$: H or propenyl group;
A: $C_{2-4}$ alkylene group or substituted alkylene group;
M: alkali metal or the like; and
n: 1 to 200
(see Japanese Patent Laid-Open No. 53802/1992)

7) 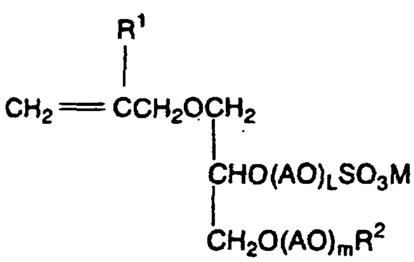

wherein
$R^1$: H or $CH_3$;
$R^2$: $C_{8-24}$ hydrocarbon group or the like;
A: $C_{2-4}$ alkylene group;
M: H, alkali metal, alkaline earth metal, ammonium group or the like;
L: 0 to 20; and
m: 0 to 50
(see Japanese Patent Laid-Open No. 104802/1987)

8) 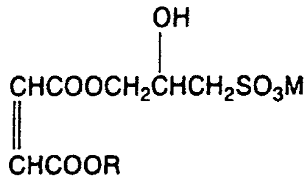

wherein
R: $C_{8-22}$ hydrocarbon group; and
M: alkali metal or ammonium group
(see Japanese Patent Laid-Open No. 40388/1974)

9) 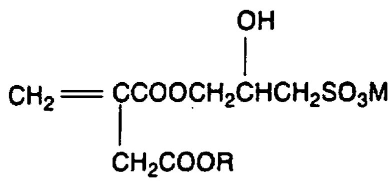

wherein
R: $C_{8-22}$ hydrocarbon group; and
M: alkali metal or ammonium group
(see Japanese Patent Laid-Open No. 40388/1974)

10) 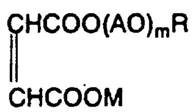

wherein
R: alkyl or alkylphenyl;
A: ethylene;
M: ammonium, amine, or alkali metal; and
m: 9, 12, 14, or 28 (working example)
(see Japanese Patent Laid-Open No. 134658/1977)

11) 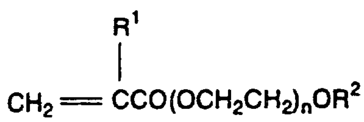

wherein
$R^1$: H or $CH_3$;
$R^2$: H, $CH_3$, or $-C_6H_4-(CH_2)_m-H$; and
n: 4 to 30
(see Japanese Patent Laid-Open No. 126093/1978)

12) 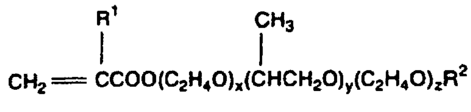

wherein
$R^1$ and $R^2$: H or $CH_3$;
x: 0 to 100;
y: 0 to 100;
z: 0 to 100; and
$1 \le x + y + z \le 100$
(see Japanese Patent Laid-Open No. 28208/1981)

13) 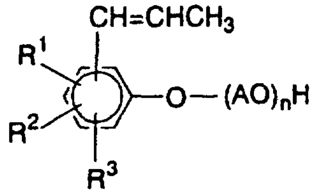

wherein
$R^1$: $C_{6-18}$ alkyl group or the like;
$R^2$: H, $C_{6-18}$ alkyl group or the like;
$R^3$: H or propenyl group;
A: $C_{2-4}$ alkylene group or substituted alkylene group; and
n: 1 to 200
(see Japanese Patent Laid-Open No. 50204/1992)

14) 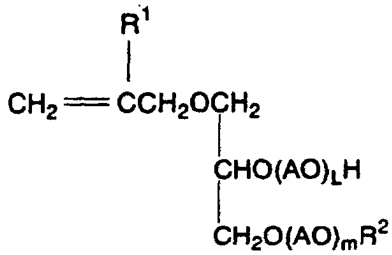

wherein
$R^1$: H or $CH_3$;
$R^2$: $C_{8-24}$ hydrocarbon group or acyl group;
A: $C_{2-4}$ alkylene group;
L: 0 to 100; and
m: 0 to 50
(see Japanese Patent Laid-Open No. 104802/1987)

15) 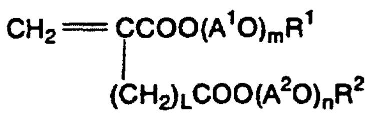

wherein
$R^1$ and $R^2$: H, $C_{1-20}$ hydrocarbon group, or acyl group;
$A^1$ and $A^2$: $C_{2-4}$ alkylene group or substituted alkylene group;
L: 1 or 2;
m and n: 0 or integer with the proviso that $m + n \geq 3$; and
when both $R^1$ and $R^2$ are H, m and $n \geq 1$
(see Japanese Patent Laid-Open No. 98484/1975)

The amount of these other surfactants used is preferably 0 to 15% by weight, more preferably 0.1 to 10% by weight, based on the total amount of the monomers. When the amount of these other surfactants used falls within the above-defined range, the occurrence of coagulates at the time of polymerization can be suppressed and, at the same time, a significant lowering in water resistance of the emulsion can be suppressed.

(a) Alkyl (meth)acrylate

The synthetic resin emulsion according to the present invention can be prepared by providing, as monomers, at least an alkyl (meth)acrylate, an ethylenically unsaturated carboxylic acid, and a monomer copolymerizable with these monomers and polymerizing the monomers.

In the present invention, the alkyl (meth)acrylate usable as the monomer for polymerization may be properly selected according to applications without particular limitation. Alkyl acrylates or alkyl methacrylates, in which the alkyl group has 1 to 12 carbon atoms, are preferred as the alkyl (meth)acrylate. Specific examples of suitable alkyl (meth) acrylates include methyl acrylate, ethyl acrylate, propyl acrylate, butyl acrylate, 2-ethylhexyl acrylate, hydroxyethyl acrylate, hydroxypropyl acrylate, hydroxybutyl acrylate, methyl methacrylate, ethyl methacrylate, propyl methacrylate, n-, t-, or iso-butyl methacrylate, 2-ethylhexyl methacrylate, hydroxyethyl methacrylate, hydroxypropyl methacrylate, hydroxybutyl methacrylate, cyclohexyl methacrylate, and cyclohexyl acrylate. They may be used solely or in a combination of two or more.

In the present invention, not less than 50% by weight of the total amount of the alkyl (meth)acrylate used should be accounted for by an alkyl (meth)acrylate in which the alkyl group has 4 or less carbon atoms. According to a preferred embodiment of the present invention, the content of the alkyl (meth)acrylate, in which the alkyl group has 4 or less carbon atoms, is preferably not less than 50% by weight, more preferably not less than 70% by weight, based on the total amount of the alkyl (meth)acrylate used.

When not less than 50% by weight of the total amount of the alkyl (meth)acrylate used should be accounted for by an alkyl (meth)acrylate in which the alkyl group has 4 or less carbon atoms, the composition of the resultant resin is similar to the composition of the resin in the elastic coating material as the topcoating material. Therefore, in this case, the sealer using the synthetic resin emulsion according to the present invention advantageously has good adhesion to the topcoating material. In this case, advantageously, the water resisting adhesion is also excellent.

Alkyl groups having 4 or less carbon atoms include, for example, methyl, ethyl, n-butyl, and t-butyl groups. Therefore, preferred alkyl (meth)acrylates, in which the alkyl group has 4 or less carbon atoms, include methyl methacrylate, butyl acrylate, butyl methacrylate, ethyl acrylate, and ethyl methacrylate. They may be used solely or in a combination of two or more.

In the present invention, methyl methacrylate and butyl acrylate are more preferred from the viewpoints of weathering resistance, transparency of the formed film, water resistance, and toughness of the formed film.

The amount of the alkyl (meth)acrylate used is generally 20 to 99.5% by weight based on the total amount of the monomers. When the amount of the alkyl (meth)acrylate used falls within the above-defined range, interlaminar peeling from the topcoating and various adhesion failures can be advantageously prevented.

(b) Ethylenically unsaturated carboxylic acid

The ethylenically unsaturated carboxylic acid used as the monomer for the formation of the emulsion in the present invention may be properly selected according to applications without particular limitation. The use of the ethylenically unsaturated carboxylic acid can further stabilize the resultant synthetic resin emulsion.

Ethylenically unsaturated carboxylic acids usable in the present invention include, for example, monocarboxylic acids and dicarboxylic acids, such as acrylic acid, methacrylic acid, crotonic acid, maleic acid, fumaric acid, itaconic acid, citraconic acid, and cinnamic acid. They may be used solely or in a combination of two or more.

Among them, acrylic acid and methacrylic acid are preferred, for example, from the viewpoints of high availability, copolymerizability, storage stability of the resultant emulsion, and good adhesion of the sealer to topcoating.

The amount of the ethylenically unsaturated carboxylic acid used is preferably 0.5 to 10.0% by weight, more preferably 1.0 to 6.0% by weight, based on the total amount of the monomers. The use of the ethylenically unsaturated carboxylic acid in an amount falling within the above-defined range is advantageous from the viewpoint of the stability of the emulsion and, in addition, is preferred from the viewpoint of better water resistance of the coating of the sealer.

(c) Monomer copolymerizable with alkyl (meth)acrylate and ethylenically unsaturated carboxylic acid

The monomer copolymerizable with alkyl (meth)acrylate and ethylenically unsaturated carboxylic acid used in the present invention may be properly selected according to applications without particular limitation. Preferably, however, the copolymerizable monomer has a radically polymerizable unsaturated bond.

Functional group-containing monomers, crosslinkable monomers and the like may also be used as the copolymerizable mononer.

The functional group-containing monomer may be selected, for example, from glycidyl, ureido, acetoacetoxy, acetoacetyl, amide, allyl, silyl, nitrile, and hydroxyl groups. The use of this monomer permits the functional group in the emulsion to chemically act on the old coating and the topcoating material and thus can improve the adhesion of the old coating and the topcoating material to the sealer and, in addition, water resisting adhesion.

Specific examples of monomers copolymerizable with the alkyl (meth)acrylate and the ethylenically unsaturated carboxylic acid used in the present invention include: aromatic vinyl compounds, such as ethylene, vinyl chloride, vinylidene chloride, styrene, and methylstyrene; vinyl esters, such as vinyl acetate, vinyl propionate, vinyl laurate, and Veova (vinyl versatate); vinyl phosphate; acrylonitrile; acrylamide; methacrylamide; N-methylolacrylamide; glycidyl acrylate; glycidyl methacrylate; allyl glycidyl ether; acetoacetoxyalkyl (meth)acrylate; allyl acetoacetate; 2-hydroxyalkyl acrylate; alkoxyethyl acrylate; and methacrylamide ethyl ethylene urea.

Further examples thereof include: vinylalkoxysilanes, such as vinyltrimethoxysilane, vinylmethyldimethoxysilane, vinyldimethylmethoxysilane, vinyltriethoxysilane, vinyl(2-methoxyethoxy)silane, and vinyltriacetoxysilane; epoxyalkoxysilanes, such as γ-glycidoxypropyltrimethoxysilane, γ-glycidoxypropylmethyldimethoxysilane, epoxyalkoxysilane, 3,4-epoxycyclohexylethyltrimethoxysilane, and 3,4-epoxycyclohexylethyldimethoxysilane; mercaptoalkoxysilanes, such as mercaptoalkoxysilane and γ-mercaptopropyltrimethoxysilane; γ-methacryloxypropyltrimethoxysilane; and γ-methacryloxypropyltriethoxysilane.

They may be used solely or in a combination of two or more.

In the present invention, styrene is preferably used as the copolymerizable monomer. The use of styrene is advantageous in that the water resistance and the alkali resistance of the resultant sealer can be improved and, in addition, the glass transition temperature of the synthetic resin emulsion can be regulated. The use of styrene is also preferred from the viewpoint of a reduction in cost.

Further, in the present invention, when the copolymerizable monomer is a functional group-containing monomer, the use of an acetoacetoxyalkyl (meth)acrylate is preferred. The acetoacetoxyalkyl (meth)acrylate refers to an acetoacetoxy-containing alkyl acrylate or alkyl methacrylate. Further, the acetoacetoxyalkyl (meth)acrylate may be used, as the copolymerizable monomer, in combination with styrene. In the present invention, acetoacetoxyethyl methacrylate is more preferred as the acetoacetoxyalkyl (meth)acrylate.

Suitable crosslinkable monomers include, for example, monomers having two or more polymerizable unsaturated groups. Monomers having two or more polymerizable unsaturated groups include, for example, divinyl compounds, di(meth)acrylate compounds, tri(meth)acrylate compounds, tetra(meth)acrylate compounds, diallyl compounds, triallyl compounds, and tetraallyl compounds. More specific examples of crosslinkable monomers include divinylbenzene, divinyl adipate, ethylene glycol di(meth)acrylate, diethylene glycol di(meth)acrylate, triethylene glycol di(meth)acrylate, polyethylene glycol di(meth)acrylate, polypropylene glycol di(meth)acrylate, neopentyl glycol di (meth)acrylate, 1,3-butylene glycol di(meth)acrylate, 1,3-butyl di(meth)acrylate, trimethylolethane tri(meth)acrylate, trimethylolpropane tri(meth)acrylate, dipentaerythrit tri(meth)acrylate, diallyl phthalate, triallyl dicyanurate, and tetraallyloxyethane. They may be used solely or in a combination of two or more.

The use of these crosslinkable monomers can advantageously improve the water resistance, the alkali resistance, the chemical resistance and other properties of the synthetic resin emulsion, but on the other hand, increases the crosslinking density and consequently lowers the adhesion of the sealer to the topcoating material and causes a deterioration in crosslink points by ultraviolet light with the elapse of time which has a fear of the properties of the sealer being rapidly deteriorated. For this reason, preferably, the amount of the crosslinkable monomer used is minimized.

In the present invention, the amount of these copolymerizable monomers used may vary depending, for example, upon the type of the copolymerizable monomer used and the amount of other monomer used. In the present invention, however, the amount of these copolymerizable monomers used is 0 to 79.5% by weight, preferably 0 to not more than 70% by weight. When a monomer containing a functional group selected from glycidyl, ureido, acetoacetoxy, acetoacetyl, amide, allyl, silyl, nitrile, and hydroxyl groups is used as the copolymerizable monomer, the amount of this monomer used is preferably 0.1 to 10% by weight, more preferably 0.3 to 5.0% by weight, based on the total amount of the monomers. The use of the functional group-containing monomer in an amount falling within the above-defined range is advantageous from the viewpoints of the adhesion between the sealer and the old coating and the topcoating material and the water resistance and is also advantageous from the viewpoint of the stability of the synthetic resin emulsion.

In the synthetic resin emulsion according to the present invention, other auxiliary components may be properly selected and used according to applications without particular limitation. Other auxiliary components usable herein include, for example, conventional additives, such as polymerization initiators, coalescing agent, MFT modifiers, chain transfer agents, surface tension depressants, aqueous media, pH adjustors (or neutralizing agents), thickeners, antifreezing agents, antifoaming agents, and preservatives.

Polymerisation initiators include, for example, persulfates, such as potassium persulfate, sodium persulfate, and ammonium persulfate (APS), organic peroxides, such as hydrogen peroxide and butyl peroxide, and redox polymerization initiators comprising a combination of the above compounds with a reducing agent. They may be used solely or in a combination of two or more.

The chain transfer agent is not particularly limited, and may be properly selected from conventional chain transfer agents, and examples thereof include: alcohols, such as methanol, ethanol, propanol, and butanol; acetone, methyl ethyl ketone, cyclohexanone, and acetophenone; carboxylic acids having 2 to 8 carbon atoms, such as acetaldehyde, propionaldehyde, n-butylaldehyde, furfural, and benzaldehyde; and mercaptans, such as dodecyl mercaptan, lauryl mercaptan, normal mercaptan, thioglycolic acid, octyl thioglycolate, and thioglycerol. They may be used solely or in a combination of two or more.

For some state and type of the old coating, at the time of coating of the sealer, in some cases, the sealer is

repelled by the old coating, making it difficult to perform coating. To overcome this problem, a surface tension depressant may be added to the synthetic resin emulsion used in the sealer composition.

Surface tension depressants include, for example, organic solvents, which can depress the surface tension, such as alcohols, and surfactants which can depress the surface tension. Among them, surfactants, which can depress the surface tension, are preferred from the viewpoint of odor and safety. Surfactants, which can depress the surface tension, include: anionic fluorosurfactants, for example, perfluoroalkylsulfonates, perfluoroalkylcarboxylates, and perfluoroalkylphosphoric esters; cationic fluorosurfactants, for example, perfluoroalkyltrimethylammonium salts; amphoteric fluorosurfactants, for example, perfluoroalkylbetaine; nonionic fluorosurfactants, for example, perfluoroalkylamine oxide and perfluoroalkylethylene oxide adducts; for example, alkylsulfosuccinates, such as dioctylsulfosuccinate, polyoxyalkylene alkyl ether phosphates, such as polyoxyalkylene alkyl ether phosphonates and polyoxyalkylene alkyl ether phosphates, alkylallyl sulfonates and condensation products thereof, and alkylsulfates; and, for example, polyoxyethylene alkyl ether sulfates, polyoxyethylene alkylphenyl ether sulfates, polyoxyethylene alkyl ethers, polyoxyethylene alkylphenyl ethers, and polyoxyethylene sorbitan fatty acid esters. They may be used solely or in a combination of two or more.

<u>Minimum film-forming temperature</u>

The synthetic resin emulsion according to the present invention preferably has a minimum film-forming temperature (MFT) of 0°C or below. MFT may be measured with an MFT measuring device manufactured by Tester Sangyo Co., Ltd. Here the minimum film-forming temperature refers to the lowest temperature at which water contained in the emulsion is evaporated with the progress of drying and permits the synthetic resin particles to be densely packed and to be melted and diffused to form a continuous film.

The sealer composition using the synthetic resin emulsion according to the present invention is generally coated in indoor or outdoor building sites. When MFT is 0°C or below, advantageously, the film can be always formed under usual environmental temperatures.

In order to modify MFT of the synthetic resin emulsion, a coalescing agent or a high-boiling solvent as an MFT modifier may be used in the synthetic resin emulsion. Accordingly, a coalescing agent may be used to bring MFT to 0°C or below.

The coalescing agent is not particularly limited, and may be properly selected from conventional coalescing agent. Examples of coalescing agent include hydrocarbon solvents, alcohol solvents, ether alcohol and ether solvents, and ester and ether ester solvents. Here the high-boiling solvent is preferably an organic solvent having a boiling point of 150°C or above.

Specific examples of hydrocarbon solvents include mineral spirits and petroleum mixed solvents. Alcohol solvents include, for example, benzyl alcohol. Ether alcohol and ether solvents include, for example, ethylene glycol monobutyl ether (butyl cellosolve), diethylene glycol monobutyl ether (butyl carbitol), dipropylene glycol monomethyl ether (DPM), propylene glycol n-butyl ether (PnB), dipropylene glycol n-butyl ether (DPnB), and ethylene glycol mono-2-ethylhexyl ether (EHG). Further, ester and ether ester solvents include, for example, diethylene glycol monobutyl ether acetate (BCA) and 2,2,4-trimethyl-1,3-pentanediol monoisobutyrate (Texanol).

They may be used solely or in a combination of two or more.

In the present invention, the coalescing agent is preferably Texanol, EHG, DPnB or the like, for example, from the viewpoint of easiness in the entry into emulsion particles, the effect of lowering MFT, and the stability after the addition thereof, and Texanol is more preferred.

<u>Glass transition temperature</u>

The synthetic resin emulsion according to the present invention preferably has a glass transition temperature (Tg) of 15 to 50°C, more preferably 20 to 45°C. Here the glass transition temperature refers to a temperature at which the synthetic resin particles contained in the synthetic resin emulsion causes a phase change from a hard, brittle glass state to a soft, rubbery state. The glass transition temperature referred to herein may be determined by a calculation using the following FOX's equation.

(FOX's equation)

$$1/Tg = W_1/Tg_1 + W_2/Tg_2 + W_3/Tg_3 + \cdots + W_n/Tg_n$$

$$W_1 + W_2 + W_3 + \cdots + W_n = 1$$

wherein

1 to n represent a positive number;
$W_1$, $W_2$, $W_3$, .. , and $W_n$ respectively represent the weight fractions of the monomers; and
$Tg_1$, $Tg_2$, $Tg_3$, .., and $Tg_n$ respectively represent the glass transition points (absolute temperature) of the homopolymers.

When the glass transition temperature falls within the above-defined temperature range, the adhesion between the sealer and the topcoating is advantageously excellent. Further, when the glass transition temperature falls within the above-defined range, the amount of the coalescing agent necessary for bringing MFT to 0°C or below can be reduced and, thus, the content of the coalescing agent in the synthetic resin emulsion can be relatively lowered. Consequently, the water resistance and the stability of the synthetic resin emulsion can be improved.
On the other hand, when the glass transition temperature is below 15°C, the amount of the coalescing agent necessary for bringing MFT to 0°C or below may be small. In this case, however, the adhesion between the sealer and the topcoating is sometimes disadvantageously deteriorated. When the glass transition temperture is above 50°C, the amount of the coalescing agent necessary for bringing MFT to 0°C or below is increased. Therefore, in this case, the stability of the synthetic resin emulsion is sometimes lowered and, further, the amount of the coalescing agent, which stays in the sealer film, is so large that the water resistance of the film is often lowered.

Average particle diameter of synthetic resin particles dispersed in emulsion

The average particle diameter of the synthetic resin particles dispersed in the synthetic resin emulsion according to the present invention is 0.01 to 0.2 µm, preferably 0.05 to 0.15 µm. When the average particle diameter falls within the above-defined range, the amount of the emulsifier used can be reduced, and, at the same time', satisfactory water resistance can be imparted to the synthetic resin emulsion.
In the present invention, the average particle diameter of the synthetic resin particles dispersed in the synthetic resin emulsion may be measured on the principle generally called "photon correlation spectroscopy method" and, more specifically, may be measured, for example, with NICOMP MODEL 370 submicron particle sizer, manufactured by Pacific Scientific.

Production process of synthetic resin emulsion

The synthetic resin emulsion according to the present invention may be produced by copolymerizing monomers, i.e., at least an alkyl (meth)acrylate, an ethylenically unsaturated carboxylic acid, and a monomer copolymerizable with these monomers, in the presence of an alkyldiphenyl ether disulfonate as an emulsitier.
The polymerization may be carried out any method without particular limitation, and examples of polymerization methods include: a batch polymerization method which comprises charging all of water, an emulsifier, and monomers into a polymerization vessel, raising the temperature of the contents of the polymerization vessel, optionally adding a polymerization initiator, and allowing polymerization to proceed; a monomer dropping method which comprises charging water and an emulsifier into a polymerization vessel, raising the temperature of the contents of the polymerization vessel, and adding monomers dropwise to the polymerization vessel; and an emulsion monomer dropping method which comprises previously emulsifying monomers, to be added dropwise, with an emulsifier and water, and then adding the emulsified monomers dropwise to a reaction vessel.
As described above, monomers and auxiliary components used in the polymerization may be properly selected respectively from the above-described monomers and auxiliary components. Reaction conditions for polymerization are not particularly limited, and may be properly selected according to the type of comonomers, applications and the like.

Sealer composition

The sealer composition according to the present invention comprises the synthetic resin emulsion according to the present invention. The sealer composition according to the present invention may contain various conventional components so far as the synthetic resin emulsion according to the present invention is contained.
Specifically, the sealer composition according to the present invention may further contain an aqueous dispersion of a chlorinated polyolefin. The sealer composition comprising the synthetic resin emulsion according to the present invention and the aqueous dispersion of a chlorinated polyolefin, even when coated on a highly deteriorated old coating or a special resin-type old coating, can exhibit excellent adhesion and water resistance. Further, in this sealer composition, since the synthetic resin emulsion and the aqueous dispersion of a chlorinated polyolefin can be

advantageously used in combination, the use of the synthetic resin emulsion according to the present invention in the conventional aqueous sealer composed mainly of an aqueous dispersion of a chlorinated polyolefin can reduce the odor of the sealer and, at the same time, can reduce production cost.

The sealer composition according to the present invention may further comprise additional assistants. Additional assistants include, for example, antifoaming agents, wetting agents, antifreezing agents, preservatives, viscosity modifiers, dispersants, coalescing agent, plasticizers, colorants such as pigments, gypsum, cement, and fillers. In addition to these assistants, a minor amount of a solvent may be added from the viewpoint of improving drying properties and improving coatability.

These assistants may be incorporated into the sealer composition by separately providing a formulation containing these assistants (for example, a pigment paste) and mixing this formulation with the synthetic resin emulsion.

Method for recoating of coating

According to a further aspect of the present invention, there is provided a method for recoating of a coating provided on the surface of an exterior material, comprising the steps of: coating the sealer composition according to the present invention onto an old coating provided on the surface of an exterior material; and then coating a topcoating material on the coating of the sealer composition.

[EXAMPLES]

The following examples further illustrate the present invention but are not intended to limit it.

Preparation of emulsions

Emulsion 1

A reaction vessel was charged (precharged) with 422 parts by weight of water, 6 parts by weight of an anionic surfactant (50% aqueous solution), and 7 parts by weight of a nonionic surfactant (80% aqueous solution). Water (400 parts by weight), 1.8 parts by weight of sodium acetate, 11 parts by weight of Dowfax 2 A 1 (sodium alkyldiphenyl ether disulfonate (50% aqueous solution), manufactured by Nippon Nyukazai K.K.), 11 parts by weight of an anionic surfactant, 7 parts by weight of a nonionic surfactant, 210 parts by weight of methyl methacrylate (monomer (a)), 225 parts by weight of butyl acrylate (monomer (a)), 28 parts by weight of 80% acrylic acid (monomer (b)), and 315 parts by weight of styrene (monomer (c)) were emulsified and mixed together to prepare an emulsion monomer. The emulsion monomer was then added dropwise to the reaction vessel, the temperature was controlled at 80°C, and 87.5 parts by weight of 3% potassium persulfate as a polymerization initiator was added dropwise thereto to perform emulsion polymerization. After the completion of the polymerization, the polymerization system was cooled and was neutralized with aqueous ammonia (10% ammonia). Further, 196 parts of Texanol was added as a coalescing agent to the system. Water was then added thereto to regulate the nonvolatile content to about 45%. Thus, an emulsion 1 was prepared. The emulsion thus obtained had a glass transition temperature (Tg: calculated value) of 36°C.

Emulsions 2 to 11

In the same manner as described in the emulsion 1, emulsions 2 to 11 were prepared according to formulations indicated in Table 1. In Table 1, all of the values are in parts by weight.

Table 1

| | | | Emulsion | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Emulsion monomer: | Water | | 400 | 400 | 400 | 400 | 400 | 400 | 400 | 400 | 400 | 400 | 400 |
| | Sodium acetate (trihydrate) | | 1.8 | 1.8 | 1.8 | 1.8 | 1.8 | 1.8 | 1.8 | 1.8 | 1.8 | 1.8 | 1.8 |
| | Dowfax 2 A 1 | | 11 | 11 | 11 | 11 | 37.5 | 11 | 11 | 0 | 11 | 11 | 11 |
| | Anionic surfactant (50% aqueous solution) | | 11 | 11 | 11 | 11 | 0 | 11 | 11 | 33 | 11 | 11 | 11 |
| | Nonionic surfactant (80% aqueous solution) | | 7 | 7 | 7 | 7 | 0 | 7 | 7 | 0 | 7 | 7 | 7 |
| | Surfactant of formula 7 (100% product) | | 0 | 0 | 0 | 0 | 7.5 | 0 | 0 | 0 | 0 | 0 | 0 |
| | (a): | Methyl methacrylate | 210 | 210 | 525 | 210 | 210 | 225 | 112.5 | 210 | 0 | 112.5 | 300 |
| | | Butyl acrylate | 225 | 225 | 225 | 225 | 225 | 300 | 187.5 | 225 | 0 | 525 | 150 |
| | | 2-Ethylhexyl acrylate | 0 | 0 | 0 | 0 | 0 | 0 | 0 | 0 | 195 | 0 | 0 |
| | (b): | 80% acrylic acid | 28 | 28 | 11.3 | 28 | 28 | 28 | 28 | 28 | 28 | 28 | 28 |
| | | Methacrylic acid | 0 | 0 | 4.5 | 0 | 0 | 0 | 0 | 0 | 0 | 0 | 0 |
| | (c): | Styrene | 315 | 315 | 0 | 315 | 315 | 225 | 450 | 315 | 555 | 112.5 | 300 |
| | | Acetoacetoxyethyl methacrylate | 0 | 0 | 0 | 22.5 | 22.5 | 22.5 | 22.5 | 0 | 0 | 0 | 0 |
| | | Glycidyl methacrylate | 0 | 7.5 | 0 | 0 | 0 | 0 | 0 | 0 | 0 | 0 | 0 |
| | | Methacrylamide ethylethylene urea | 0 | 0 | 11.3 | 0 | 0 | 0 | 0 | 0 | 0 | 0 | 0 |
| Precharge: | Water | | 422 | 422 | 422 | 422 | 422 | 422 | 422 | 422 | 422 | 422 | 422 |
| | Dowfax 2 A 1 | | 0 | 0 | 0 | 0 | 37.5 | 0 | 0 | 0 | 0 | 0 | 0 |
| | Anionic surfactant (50% aqueous solution) | | 6 | 6 | 6 | 6 | 0 | 6 | 6 | 4 | 6 | 6 | 6 |
| | Nonionic surfactant (80% aqueous solution) | | 7 | 7 | 7 | 7 | 0 | 7 | 7 | 0 | 6 | 7 | 7 |
| Polymerization initiator | (3% aq. potassium persulfate solution) | | 87.5 | 87.5 | 87.5 | 87.5 | 87.5 | 87.5 | 87.5 | 87.5 | 87.5 | 87.5 | 87.5 |
| Neutralizing agent | (10% aq. ammonia) | | 38 | 38 | 38 | 38 | 38 | 38 | 38 | 38 | 38 | 38 | 38 |
| Coalescing agent | (Texanol) | | 196 | 196 | 196 | 196 | 196 | 114 | 248 | 196 | 196 | 0 | 280 |
| Nonvolatile content, % | | | 45 | 45 | 45 | 45 | 45 | 45 | 45 | 45 | 45 | 45 | 45 |
| Tg, °C | | | 36 | 36 | 38 | 36 | 36 | 20 | 44 | 36 | 35 | -22 | 56 |
| MFT, °C | | | ≤ 0 | ≤ 0 | ≤ 0 | ≤ 0 | ≤ 0 | ≤ 0 | ≤ 0 | ≤ 0 | ≤ 0 | ≤ 0 | ≤ 0 |
| Average particle diameter, µm | | | 0.09 | 0.09 | 0.09 | 0.09 | 0.05 | 0.09 | 0.09 | 0.09 | 0.09 | 0.09 | 0.09 |

Preparation of sealer compositions

Sealer compositions 1 to 13

Sealer compositions 1 to 13 were prepared according to formulations indicated in Table 2. In Table 2, the pigment paste was prepared by dispersing and mixing ingredients indicated in Table 3 together in a sand mill. In Tables 2 and 3, all of the values are in parts by weight.

Evaluation method

Preparation of specimens

A commercially available acryl/vinyl acetate resin coating material using a solvent was coated on a slate, and the coated slate was held at 50°C for 3 days to heat deteriorate the coating to form an old coating. Each of the sealer compositions 1 to 13 was coated onto the old coating at a coverage of 10 to 12 g/m$^2$ on a solid basis, and the coatings were then dried at room temperature. Next, a commercially available single-layer elastic coating material A, a commercially available single-layer elastic coating material B, and a main material C of a commercially available multi-layer elastic coating material were coated as topcoating materials in a wet state to 1 mm, and the coatings were dried at room temperature for one week. Thus, specimens were prepared.

Evaluation of blistering resistance in water

The specimens thus obtained each were immersed in water for three days, were taken out of water, and were then inspected for blistering to evaluate the blistering resistance in terms of blister sizes specified in ASTM D 714 according to the following criteria. The results were as shown in Table 2. In Table 2, the better the blistering resistance, the better the adhesion of the sealer composition to the old coating and the topcoating and the water resistance.

A: The blister size was 6 or less.
B: The blister size was 4.
C: The blister size was 2 or more, or interlaminar peeling occurred.

Table 2

| | Sealer composition | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| Emulsion 1 | 100 | - | - | - | - | - | - | - | - | - | - | - | - |
| Emulsion 2 | - | 100 | - | - | - | - | - | - | - | - | - | - | - |
| Emulsion 3 | - | - | 100 | - | - | - | - | - | - | - | - | - | - |
| Emulsion 4 | - | - | - | 100 | - | - | - | 100 | 100 | - | - | - | - |
| Emulsion 5 | - | - | - | - | 100 | - | - | - | - | - | - | - | - |
| Emulsion 6 | - | - | - | - | - | 100 | - | - | - | - | - | - | - |
| Emulsion 7 | - | - | - | - | - | - | 100 | - | - | - | - | - | - |
| Emulsion 8 | - | - | - | - | - | - | - | - | - | 100 | - | - | - |
| Emulsion 9 | - | - | - | - | - | - | - | - | - | - | 100 | - | - |
| Emulsion 10 | - | - | - | - | - | - | - | - | - | - | - | 100 | - |
| Emulsion 11 | - | - | - | - | - | - | - | - | - | - | - | - | 100 |
| Aq. dispersion of chlorinated polyolefin (Movinyl 095) | - | - | - | - | - | - | - | 100 | - | - | - | - | - |
| Pigment paste | - | - | - | - | - | - | - | - | 86.7 | - | - | - | - |
| 14% ammonia | - | - | - | - | - | - | - | - | 0.4 | - | - | - | - |
| Ethylene glycol | - | - | - | - | - | - | - | - | 3.6 | - | - | - | - |
| Antifoaming agent (Nopco 8034 (Sannopco Ltd.)) | - | - | - | - | - | - | - | - | 0.4 | - | - | - | - |
| Blistering resistance in water | | | | | | | | | | | | | |
| Single-layer elastic coating material A | A | A | A | A | A | A | A | A | A | B | B | C | B |
| Single-layer elastic coating material B | A | A | A | A | A | A | A | A | A | B | C | C | B |
| Main material C of multi-layer elastic coating material | A | A | A | A | A | A | A | A | A | B | B | B | C |

Table 3

| Formulation of pigment paste | Amount |
| --- | --- |
| Water | 20 |
| 2% aq. Tylose MH 2,000 K (methylhydroxyethylcellulose) solution | 100 |
| 10% aq. sodium hexametaphosphate solution | 5 |
| Dispersant (Additol XW-330 (dispersant)) | 3 |
| Antifoaming agent (Nopco 8034 (Sannopco Ltd.)) | 2 |
| Preservative (Mergal KM 101 A) | 2 |
| Titanium oxide (Tipaque R-820, manufactured by Ishihara Sangyo Kaisha Ltd.) | 150 |
| Calcium carbonate (Durcal 5) | 150 |
| Clay (NN Light Kaolin Clay, manufactured by Tsuchiya Kaolin Industry Co., Ltd.) | 50 |

## Claims

1. A synthetic resin emulsion comprising synthetic resin particles dispersed in water, said synthetic resin emulsion which is produced by copolymerizing

   (a) 20 to 99.5% by weight of an alkyl (meth)acrylate wherein the content of an alkyl (meth)acrylate, in which the alkyl group has 4 or less carbon atoms, is not less than 50% by weight based on the whole alkyl (meth) acrylate;
   (b) 0.5 to 10% by weight of an ethylenically unsaturated carboxylic acid; and
   (c) 0 to 79.5% by weight of a monomer copolymerizable with said monomers (a) and (b), in the presence of an alkyldiphenyl ether disulfonate as an emulsifier,

   said synthetic resin emulsion having a glass transition temperature (Tg) of 15 to 50°C, the average particle diameter of the synthetic resin particles dispersed in water being 0.01 to 0.2 μm.

2. The synthetic resin emulsion according to claim 1, wherein the minimum film-forming temperature (MFT) is 0°C or below.

3. The synthetic resin emulsion according to claim 1 or 2, wherein the alkyl (meth)acrylate, in which the alkyl group has 4 or less carbon atoms, is selected from the group consisting of methyl methacrylate, butyl acrylate, butyl methacrylate, ethyl acrylate, and ethyl methacrylate.

4. The synthetic resin emulsion according to any one of claims 1 to 3, wherein the copolymerizable monomer is a monomer having a functional group selected from the group consisting of glycidyl, ureido, acetoacetoxy, acetoacetyl, amide, allyl, silyl, nitrile, and hydroxyl groups.

5. The synthetic resin emulsion according to claim 4, wherein the amount of the monomer having a functional group used is 0.1 to 10.0% by weight based on the whole monomer contained in the synthetic resin emulsion.

6. The synthetic resin emulsion according to claim 4 or 5, wherein the monomer having a functional group is acetoacetoxyethyl (meth)acrylate.

7. A sealer composition for recoating a coating, comprising the synthetic resin emulsion according to any one of claims 1 to 6.

8. The sealer composition according to claim 7, which further comprises an aqueous dispersion of a chlorinated polyolefin.

9. An exterior material for buildings, which has been coated with the sealer composition for recoating of a coating according to claim 7.

10. A process for producing the synthetic resin emulsion according to claim 1, comprising the steps of:

    providing, as monomers, at least an alkyl (meth)acrylate, an ethylenically unsaturated carboxylic acid, and a monomer copolymerizable with the alkyl (meth)acrylate and the ethylenically unsaturated carboxylic acid; and copolymerizing the monomers in the presence of an alkyldiphenyl ether disulfonate.

11. A method for recoating of a coating provided on the surface of an exterior material, comprising the steps of: coating the sealer composition according to claim 7 onto an old coating provided on the surface of an exterior material; and then coating a topcoating material on the coating of the sealer composition.

12. The method according to claim 11, wherein the old coating has been formed using a resin coating material.

13. The method according to claim 11 or 12, wherein the topcoating material is an elastic coating material, an acrylic resin coating material, an acryl/styrene resin coating material, an acryl/silicone resin coating material, a silicone resin coating material, an acryl/urethane resin coating material, or an urethane resin coating material.

14. The method according to any one of claims 11 to 13, wherein the sealer composition further comprises an aqueous

dispersion of a chlorinated polyolefin.

**15.** Use of the synthetic resin emulsion according to any one of claims 1 to 6, for the production of a sealer composition for recoating of a coating.

**Patentansprüche**

**1.** Synthetische Harzemulsion aus in Wasser dispergierten, synthetischen Harzpartikeln, wobei die genannte synthetische Harzemulsion durch Copolymerisation von

(a) 20 bis 99,5 Gewichtsprozent eines Alkyl(meth)acrylats, dessen Gehalt an Alkyl(meth)acrylat, bei dem die Alkylgruppe höchstens 4 Kohlenstoffatome besitzt, mindestens 50 Gewichtsprozent beträgt, bezogen auf das gesamte Alkyl(meth)-acrylat;

(b) 0,5 bis 10 Gewichtsprozent einer ethylenisch ungesättigten Carbonsäure; und

(c) 0 bis 79,5 Gewichtsprozent eines in Anwesenheit eines Alkyldiphenyletherdisulfonats als Emulgator mit den genannten Monomeren (a) und (b) copolymerisierbaren Monomers,

hergestellt wird und eine Glasübergangstemperatur (Tg) von 15°C bis 50°C hat, und der durchschnittliche Teilchendurchmesser der synthetischen, in Wasser dispergierten Harzpartikel 0,01 μm bis 0,2 μm beträgt.

**2.** Synthetische Harzemulsion gemäß Anspruch 1, wobei die Mindesfilmbildetemperatur (MFT) 0°C oder weniger beträgt.

**3.** Synthetische Harzemulsion gemäß Anspruch 1 oder 2, wobei das Alkyl(meth)acrylat, bei dem die Alkylgruppe höchstens 4 Kohlenstoffatome hat, aus einer Gruppe gewählt wird, die aus Methylmethacrylat, Butylacrylat, Butylmethacrylat, Ethylacrylat und Ethylmethacrylat besteht.

**4.** Synthetische Harzemulsion gemäß einem der Ansprüche 1 bis 3, wobei das copolymerisierbare Monomer ein Monomer mit einer funktionellen Gruppe ist, die aus einer Gruppe gewählt wird, welche aus Glycidyl-, Ureid-, Acetacetoxy-, Acetacetyl-, Amid-, Allyl-, Silyl-, Nitril- und Hydroxylgruppen besteht.

**5.** Synthetische Harzemulsion gemäß Anspruch 4, wobei die Menge des verwendeten Monomers mit der funktionellen Gruppe 0,1 bis 10,0 Gewichtsprozent, bezogen auf das gesamte, in der synthetischen Harzemulsion enthaltene Monomer, beträgt.

**6.** Synthetische Harzemulsion gemäß Anspruch 4 oder 5, wobei das Monomer mit einer funktionellen Gruppe Acetacetoxyethyl(meth)acrylat ist.

**7.** Porenfüllerzubereitung zum Überdecken einer Beschichtung, enthaltend die Harzemulsion gemäß einem der Ansprüche 1 bis 6.

**8.** Porenfüllerzubereitung gemäß Anspruch 7, die zusätzlich eine wäßrige Dispersion eines chlorierten Polyolefins enthält.

**9.** Material zur Verwendung an der Außenseite von Gebäuden, das mit der Porenfüllerzubereitung zum Überdecken einer Beschichtung gemäß Anspruch 7 beschichtet wurde.

**10.** Verfahren zur Herstellung einer synthetischen Harzemulsion gemäß Anspruch 1, das aus folgenden Schritten besteht:

Bereitstellung von mindestens einem Alkyl(meth)acrylat, einer ethylenisch ungesättigten Carbonsäure und eines mit dem Alkyl(meth)acrylat und der ethylenisch ungesättigten Carbonsäure copolymerisierbaren Monomers als Monomere; und Copolymerisation der Monomere in Anwesenheit eines Alkyldiphenyletherdisulfonats.

**11.** Methode für das Überdecken einer Beschichtung auf der Oberfläche eines zur Verwendung im Außenbereich bestimmten Materials, die aus folgenden Schritten besteht:

Auftrag der Porenfüllerzubereitung gemäß Anspruch 7 auf eine alte Beschichtung auf der Oberfläche eines zur Verwendung im Außenbereich bestimmten Materials; und anschließend Auftrag eines Deckschichtmaterials auf die Schicht aus der Porenfüllerzubereitung.

**12.** Methode gemäß Anspruch 11, wobei die alte Beschichtung unter Verwendung eines Beschichtungsmaterials auf Harzbasis hergestellt wurde.

**13.** Methode gemäß Anspruch 11 oder 12, wobei das Deckschichtmaterial ein elastisches Beschichtungsmaterial, ein Beschichtungsmaterial auf Acrylharzbasis, ein Acryl/Styrolharz-Beschichtungsmaterial, ein Acryl-/Siliconharz-Beschichtungsmaterial, ein Siliconharz-Beschichtungsmaterial, ein Acryl-/Urethanharz-Beschichtungsmaterial oder ein Urethanharz-Beschichtungsmaterial ist.

**14.** Methode gemäß einem der Ansprüche 11 bis 13, wobei die Porenfüllerzubereitung zusätzlich eine wäßrige Dispersion eines chlorierten Polyolefins enthält.

**15.** Verwendung der synthetischen Harzemulsion gemäß einem der Ansprüche 1 bis 6 zur Herstellung einer Porenfüllerzubereitung zum Überdecken einer Beschichtung.

**Revendications**

**1.** Emulsion de résine synthétique comprenant des particules de résine synthétique dispersées dans l'eau, ladite émulsion de résine synthétique qui est produite en copolymérisant :

(a) 20 à 99,5% en poids d'un (méth)acrylate d'alkyle dans lequel la teneur d'un (méth)acrylate d'alkyle, dans lequel le groupe alkyle présente 4 atomes de carbone ou moins, n'est pas inférieur à 50% en poids par rapport au (méth)acrylate d'alkyle total ;
(b) 0,5 à 10% en poids d'un acide carboxylique éthyléniquement insaturé ; et
(c) 0 à 79,5% en poids d'un monomère copolymérisable avec lesdits monomères (a) et (b), en présence d'un disulfonate d'éther alkyldiphénylique en tant qu'émulsifiant ;

ladite émulsion de résine synthétique ayant une température de transition vitreuse (Tg) allant de 15 à 50°C, le diamètre particulaire moyen des particules de résine synthétique dispersée dans l'eau allant de 0,01 à 0,2 µm.

**2.** Emulsion de résine synthétique selon la revendication 1, dans laquelle la température filmogène minimale (MFT) est de 0°C ou inférieure.

**3.** Emulsion de résine synthétique selon la revendication 1 ou 2, dans laquelle le (méth)acrylate d'alkyle, dans lequel le groupe alkyle présente 4 atomes de carbone ou moins, est choisi dans le groupe formé du méthacrylate de méthyle, de l'acrylate de butyle, du méthacrylate de butyle, de l'acrylate d'éthyle et du méthacrylate d'éthyle.

**4.** Emulsion de résine synthétique selon l'une quelconque des revendications 1 à 3, dans laquelle le monomère copolymérisable est un monomère ayant un groupe fonctionnel choisi dans le groupe formé des groupes glycidyle, uréido, acétoacétoxy, acétoacétyle, amide, allyle, silyle, nitrile et hydroxyle.

**5.** Emulsion de résine synthétique selon la revendication 4, dans laquelle la quantité du monomère ayant un groupe fonctionnel utilisé, va de 0,1 à 10,0% en poids par rapport au monomère total contenu dans l'émulsion de résine synthétique.

**6.** Emulsion de résine synthétique selon la revendication 4 ou 5, dans laquelle le monomère ayant un groupe fonctionnel est le (méth)acrylate d'acétoacétoxyéthyle.

**7.** Composition d'apprêt pour redéposer un revêtement, comprenant l'émulsion de résine synthétique selon l'une quelconque des revendications 1 à 6.

**8.** Composition d'apprêt selon la revendication 7, qui comprend de plus une dispersion aqueuse d'une polyoléfine chlorée.

**9.** Matériau extérieur pour immeubles, qui a été revêtu de la composition d'apprêt pour redéposer un revêtement selon la revendication 7.

**10.** Procédé pour produire l'émulsion de résine synthétique selon la revendication 1, comprenant les étapes consistant à :

- fournir, en tant que monomères, au moins un (méth)acrylate d'alkyle, un acide carboxylique éthyléniquement insaturé et un monomère copolymérisable avec le (méth)acrylate d'alkyle et l'acide carboxylique éthyléniquement insaturé ; et
- copolymériser les monomères en présence d'un disulfonate d'éther alkyldiphénylique.

**11.** Procédé pour redéposer un revêtement fourni sur la surface d'un matériau extérieur, comprenant les étapes consistant à :

déposer la composition d'apprêt selon la revendication 7 sur un ancien revêtement fourni sur la surface d'un matériau extérieur ; puis
déposer une matière de couche de finition sur le revêtement de la composition d'apprêt.

**12.** Procédé selon la revendication 11, dans lequel l'ancien revêtement a été formé en utilisant une matière de revêtement à base de résine.

**13.** Procédé selon la revendication 11 ou 12, dans lequel la matière de couche de finition est une matière de revêtement élastique, une matière de revêtement de résine acrylique, une matière de revêtement de résine acrylique/styrène, une matière de revêtement de résine acrylique/silicone, une matière de revêtement de résine de silicone, une matière de revêtement de résine acrylique/uréthane ou une matière de revêtement de résine d'uréthane.

**14.** Procédé selon l'une quelconque des revendications 11 à 13, dans lequel la composition d'apprêt comprend de plus une dispersion aqueuse d'une polyoléfine chlorée.

**15.** Utilisation de l'émulsion de résine synthétique selon l'une quelconque des revendications 1 à 6, pour la production d'une composition d'apprêt afin de redéposer un revêtement.